# EUROPÄISCHE PATENTSCHRIFT

(11) **EP 4 320 374 B1**
(45) Veröffentlichungstag und Bekanntmachung des Hinweises auf die Patenterteilung: **02.12.2026**
(21) Anmeldenummer: 22732158.5
(22) Anmeldetag: 07.06.2022
(51) Int. Cl.: F16K 11/07, F15B 13/044, F16K 31/06, F16K 39/04, G05D 16/20

(54) **VENTIL**
VALVE
SOUPAPE

(30) Priorität: 12.06.2021 DE 102021003039
(43) Veröffentlichungstag der Anmeldung: 14.02.2024
(73) Patentinhaber: Hydac Fluidtechnik GmbH, 66280 Sulzbach/Saar (DE)
(72) Erfinder: BRUCK, Peter, 66484 Althornbach (DE); RÖDER, Benjamin, 66115 Saarbrücken (DE); BILL, Markus, 66571 Eppelborn (DE)
(74) Vertreter: Bartels und Partner, Patentanwälte
(86) Internationale Anmeldenummer: PCT/EP2022/065351
(87) Internationale Veröffentlichungsnummer: WO 2022/258589

(56) Entgegenhaltungen:
- US-A1- 2016 169 402
- US-B2- 9 453 518

## Beschreibung

Die Erfindung betrifft ein Ventil mit den Merkmalen des Oberbegriffs des Anspruchs 1.

Durch DE 10 2013 014 558 A1 ist ein Ventil, insbesondere Proportional-Druckregelventil, bekannt mit einem in einem Ventilgehäuse längsverfahrbar geführten und mittels einer Betätigungseinrichtung ansteuerbaren Ventilkolben, wobei das Ventilgehäuse mehrere Fluidanschlüsse aufweist und wobei in einer Verfahrstellung des Ventilkolbens eine fluidführende Verbindung zwischen einem Druckversorgungsanschluss und einem Nutz- oder Verbraucheranschluss und in einer anderen Verfahrstellung eine weitere fluidführende Verbindung zwischen diesem Nutzanschluss und einem Tank- oder Rücklaufanschluss hergestellt ist. Bei der bekannten Lösung wirkt der jeweilige Differenzdruck, der beim Durchströmen der weiteren fluidführenden Verbindung zwischen dem Nutzanschluss und dem Tankanschluss entsteht, mittels einer Ansteuereinrichtung derart auf den Ventilkolben ein, dass dieser entgegen einer Anschlagposition, von der ausgehend die weitere fluidführende Verbindung zusehends unterbunden wird, in eine voll geöffnete Öffnungsstellung gelangt, bei der gegenüber der Anschlagposition ein vergrößerter Öffnungsquerschnitt von Nutzanschluss zu Tank- oder Rücklaufanschluss erreicht ist.

Dahingehende Ventile in Form sog. Proportional-Druckregelventile werden sehr häufig für mobile Arbeitsmaschinen zur elektrohydraulischen Ansteuerung von Kupplungen eingesetzt. Diese Kupplungen müssen bei ihrer Betätigung zunächst mit einem Betätigungsfluid regelmäßig in Form von Öl gefüllt werden, bis ihre Reibflächen den Berührungspunkt erreichen, um als Kupplung wirken zu können. Dazu müssen in der Kupplung Federkräfte überwunden werden. Die dabei von den Federkräften verursachten Drücke sind häufig sehr klein (kleiner als 2 bar) und eine weitere Erhöhung des Kupplungsdruckes führt dann zu Normalkräften an den Kupplungsbelägen, die letztendlich das Drehmoment durch Reibkräfte übertragen können.

Problematisch werden diese kleinen Federkräfte beim Abschalten der Kupplungen, weil zum Wegbewegen der jeweiligen Kupplungsscheibe von der zuordenbaren Anlauffläche nur die von diesen Federkräften verursachten Drücke zur Erzeugung des Ölflusses durch die Proportional-Druckregelventile zur Verfügung stehen. Mit der bekannten Lösung ist eine Möglichkeit geschaffen, den Ventilkolbenhub zu vergrößern, sodass das bekannte Ventil einen sehr großen Öffnungsquerschnitt beim Entlasten der Kupplung erzeugt und somit für eine schnelle Trennung der Kupplung sorgt.

Ein weiteres Proportional-Druckregelventil, insbesondere für hydraulisch ansteuerbare Kupplungen, kann bei der Schutzrechtsinhaberin unter der Katalognummer PDMC05S30A-50 bestellt und erworben werden. Es handelt sich hierbei um einen direkt gesteuerten Proportional-Druckregler mit einem Ventilgehäuse und einem darin längsverfahrbar angeordneten Ventilkolben, der wiederum mittels eines Betätigungsmagneten ansteuerbar entweder eine fluidführende Verbindung zwischen einem Druckversorgungsanschluss und einem Verbraucheranschluss oder zwischen diesem Verbraucheranschluss und einem Tank- oder Rücklaufanschluss im Ventilgehäuse herstellt, wobei der Ventilkolben auf seinen gegenüberliegenden Stirnseiten mit dem Rücklaufanschluss permanent fluidführend verbunden ist. In aufsteigender Reihenfolge in Richtung des Betätigungsmagneten gesehen, ist stirnseitig im Ventilgehäuse zunächst der Tank- oder Rücklaufanschluss angeordnet und hierauf nachfolgend wiederum ist in radialer Richtung der Verbraucheranschluss eingebracht und hierauf wiederum nachfolgend in radialer Richtung in Form mindestens einer Querbohrung der Druckversorgungsanschluss, regelmäßig in Form eines Pumpenversorgungsanschlusses. Ferner ist zusätzlich im Ventilgehäuse in axialer Richtung eine Längsbohrung eingebracht mit relativ kleinem Durchmesser, der eine Ventilkammer oberhalb des Druckversorgungsanschlusses in Richtung des Ventilkolbens ausmündend permanent fluidführend mit dem Verbraucheranschluss verbindet, der aus mehreren Bohrungen einer Bohrungsreihe bestehen kann. Im Bereich der Ventilkammer hat der Ventilkolben einen kleinen Durchmessersprung und die hieraus sich ergebende Kreisringfläche bildet insoweit eine druckwirksame Messfläche am Ventilkolben aus, weil die einander gegenüberliegenden Stirnseiten des Ventilkolbens über eine Zentralbohrung als der fluidführenden Verbindung permanent mit dem Tank- oder Rücklaufanschluss verbunden sind.

Der im Betrieb auftretende Regeldruck wirkt dann insoweit gegen die genannte Kreisring- oder Messfläche und verursacht eine Axialkraft, welche einer Magnetkraft des Betätigungsmagneten im bestromten Zustand entgegenwirkt. Somit kann der Regeldruck in Abhängigkeit der jeweils anliegenden Magnetkraft proportional verändert werden. Ist der Regeldruck kleiner als die Magnetkraft, dann bewegt sich der Kolben in Richtung des Rücklauf- oder Tankanschlusses und öffnet insoweit eine Fluidverbindung vom Druckversorgungsanschluss in Richtung des Verbraucheranschlusses. Ist hingegen der Druck zu hoch bewegt sich der Ventilkolben in die gegenläufige Richtung und es entsteht eine fluidführende Verbindung von Verbraucheranschluss zu Tank- oder Rücklaufanschluss. Die dahingehend bekannte Lösung hat sich in der Praxis ausgesprochen gut bewährt; das Herstellen der im Querschnitt kleinen Längsbohrung benötigt jedoch eine relativ lange Bearbeitungszeit und ist somit kostenintensiv in der Herstellung.

Die US 9 453 518 B2 beschreibt ein Ventil, insbesondere ein Proportional-Druckregelventil, mit den Merkmalen des Oberbegriffs des Anspruchs 1 mit einem Ventilgehäuse und einem darin längsverfahrbar angeordneten Ventilkolben, der mittels eines Betätigungsmagneten ansteuerbar entweder eine fluidführende Verbindung zwischen einem Druckversorgungsanschluss und einem Verbraucheranschluss oder zwischen diesem Verbraucheranschluss und einem Rücklaufanschluss im Ventilgehäuse herstellt, wobei der Ventilkolben auf seinen gegenüberliegenden Stirnseiten mit dem Rücklaufanschluss permanent fluidführend verbunden ist, wobei der Ventilkolben im Bereich des Verbraucheranschlusses eine druckwirksame Messfläche aufweist, die bei bestromtem Betätigungsmagneten zum Herstellen einer fluidführenden Verbindung zwischen dem Druckversorgungs- und dem Verbraucheranschluss, den dabei am Verbraucheranschluss jeweils herrschenden Fluiddruck als Gegenkraft der Betätigungskraft des Betätigungsmagneten gegenüberstellt, und wobei der Verbraucheranschluss aus mehreren in Verfahrrichtung des Ventilkolbens gesehen hintereinander angeordneten Bohrungsreihen besteht, von denen eine Bohrungsreihe dem Herstellen der fluidführenden Verbindung zwischen Druckversorgungs- und Verbraucheranschluss und eine zweite Bohrungsreihe der Druckweiterleitung vom Verbraucheranschluss zur Messfläche des Ventilkolbens dient.

Ausgehend von diesem Stand der Technik liegt der Erfindung die Aufgabe zugrunde unter Beibehalten der Vorteile der bekannten Lösungen, diese dahingehend weiter zu verbessern, dass eine kostengünstige Möglichkeit geschaffen ist, ein solches Ventil in funktionssicherer Bauweise herzustellen. Eine dahingehende Aufgabe löst ein Ventil mit den Merkmalen des Patentanspruches 1 in seiner Gesamtheit.

Gemäß dem Kennzeichen von Anspruch 1 ist vorgesehen, dass eine dritte Bohrungsreihe dem Herstellen einer fluidführenden Verbindung zwischen dem Verbraucher- und dem Rücklaufanschluss dient.

Dadurch, dass der Ventilkolben im Bereich des Verbraucheranschlusses eine druckwirksame Messfläche aufweist, die bei bestromtem Betätigungsmagneten zum Herstellen einer fluidführenden Verbindung zwischen dem Druckversorgungs- und dem Verbraucheranschluss, den dabei am Verbraucheranschluss jeweils herrschenden Fluiddruck als Gegenkraft der Betätigungskraft des Betätigungsmagneten gegenüberstellt, ist der vorstehend angesprochene Durchmessersprung im hinteren Ventilkammer-Bereich des Ventilkolbens nunmehr direkt an die Position des Verbraucheranschlusses verlagert, sodass insoweit die aufwendig herzustellende Längsbohrung im Ventilgehäuse vollständig entfallen kann.

Das hier angesprochene Ventilkonzept muss darüber hinaus auch bei einem Kaltstart bei einer Viskosität von mehr als 2.000 cST schnell schalten können und durch das Entfallen der langen Drosselstelle in Form der Längsbohrung verbessert sich insoweit das Kaltstartverhalten für das Ventil. Des Weiteren kann mit Wegfall der im Durchmesser klein gehaltenen Längsbohrung der Durchmesser des Ventilkolbens selbst signifikant vergrößert werden, sodass dergestalt der Durchflusswiderstand des Öls erheblich reduziert wird, ohne dass der für das Ventil respektive den Ventilkolben notwendige Einbauraum vergrößert wird.

Mit der erfindungsgemäßen Lösung ist ein direkt gesteuertes Proportional-Druckregelventil realisiert, das in kostengünstiger und funktionssicherer Weise es ermöglicht, beim Einsatz für hydraulisch angesteuerte Kupplungen sehr große Öffnungsquerschnitte beim Entlasten der Kupplung zu erzeugen und somit für eine schnelle Trennung der Kupplung zu sorgen, ohne dass hierfür sehr groß aufbauende und teure Betätigungseinrichtungen in Form von Betätigungsmagneten nebst Ventilen mit großen Strömungsquerschnitten notwendig wären. Die Verwendung des Ventils braucht jedoch nicht auf Kupplungsanwendungen eingeschränkt zu sein. Weitere vorteilhafte Ausgestaltungen des erfindungsgemäßen Ventils sind Gegenstand der sonstigen Unteransprüche.

Im Folgenden wird eine Ausführungsform des erfindungsgemäßen Ventils anhand der Zeichnung näher erläutert. Dabei zeigen in prinzipieller und nicht maßstäblicher Darstellung in der Art eines Längsschnittes die
- Fig. 1: einen Proportional-Druckregler nach dem Stand der Technik; und
- Fig. 2 bis 4: das erfindungsgemäße Ventil in verschiedenen Schalt- oder Betriebsstellungen.

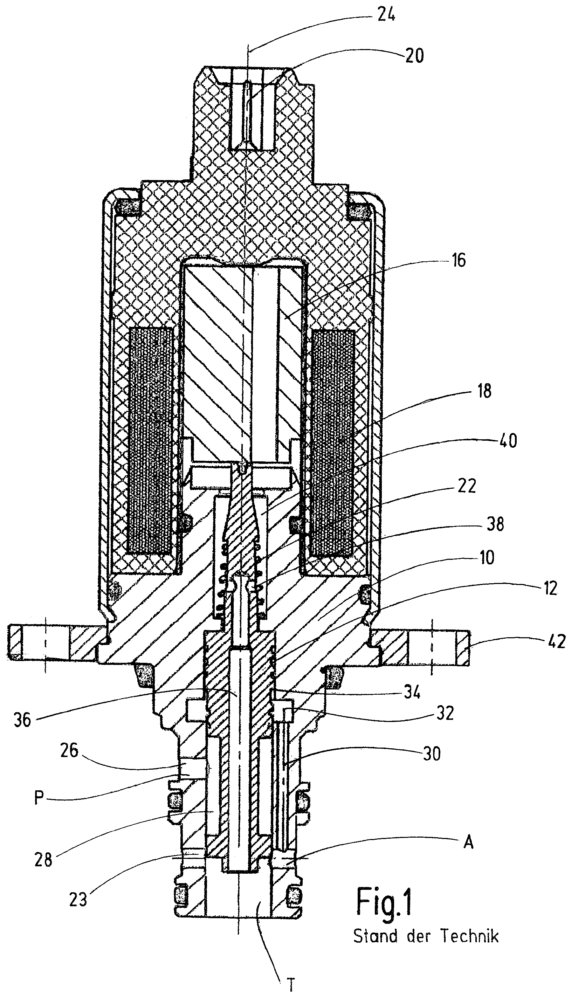

Das in Fig. 1 dargestellte Proportional-Druckregelventil zum Stand der Technik ist als Katalogware unter der Bestell-Nr. PDMC05S30A-50 bei der Schutzrechtsinhaberin zu erwerben; eine Vielzahl dieser Ventile befindet sich bei Kunden bereits in der Anwendung, insbesondere im Rahmen des Betriebs hydraulisch angesteuerter Kupplungen. Die bekannte Lösung weist ein Ventilgehäuse 10 auf mit einem darin längsverfahrbar angeordneten Ventilkolben 12, der mittels eines bestrombaren Betätigungsmagneten 14 ansteuerbar ist. Der Betätigungsmagnet 14 weist in üblicher Bauart (DE 10 2013 014 558 A1) einen ansteuerbaren Magnetanker 16 auf sowie einen elektrischen Spulenkörper 18, der mittels eines Steckeranschlussteiles 20 bestrombar ist. Wird der Betätigungsmagnet 14 über den Spulenkörper 18 bestromt, verfährt in Blickrichtung auf die Fig. 1 gesehen der Magnetanker 16 von seiner in der Fig. 1 gezeigten Ruhestellung nach unten in eine Betätigungsstellung und nimmt dabei den mit ihm in Anlage befindlichen Ventilkolben 12 in derselben Betätigungsrichtung mit und zwar entgegen der Wirkung eines Energiespeichers in Form einer Druckfeder 22. Entfällt eine Bestromung bringt die angesprochene Druckfeder 22 den Magnetanker 16 in seiner Ausgangsstellung nach der Fig. 1 zurück. In dieser unbetätigten Stellung ist ein Verbraucheranschluss A im Ventilgehäuse 10 fluidführend mit einem Tank- oder Rücklaufanschluss T verbunden. Der dahingehende Tank- oder Rücklaufanschluss T ist stirnseitig in das Ventilgehäuse 10 eingebracht, wohingegen der Verbraucheranschluss A aus einer Bohrungsreihe 23 gebildet ist mit mindestens zwei radialen Querbohrungen, die quer zur Längs- oder Betätigungsachse 24 des Ventils in das Ventilgehäuse 10 einmünden. Im gezeigten Ausführungsbeispiel nach der Fig. 1 sind mindestens zwei, vorzugsweise jedoch sechs Querbohrungen, die radial quer zur Längsachse 24 des Ventils angeordnet das Ventilgehäuse 10 durchgreifen Bestandteil der dahingehenden Bohrungsreihe 23.

In Blickrichtung auf die Fig. 1 gesehen, ist darüberliegend zumindest eine weitere Querbohrung 26 eingebracht, die einen Druckversorgungsanschluss P ausbildet und die an eine Druckquelle angeschlossen ist, wie beispielsweise an eine nicht näher dargestellte Hydropumpe. Der Verbraucheranschluss A hingegen ist an einen hydraulischen Verbraucher angeschlossen, wie beispielsweise eine hydraulisch betätigbare Kupplungsvorrichtung (nicht dargestellt). Der dahingehende Anschlussaufbau ist üblich, sodass an dieser Stelle hierauf nicht mehr näher eingegangen wird.

Des Weiteren weist der Ventilkolben 12 außenumfangsseitig eine zylindrische Ausnehmung 28 auf, deren axiale Länge derart bemessen ist, dass bei bestromtem Betätigungsmagneten 14 der Magnetanker 16 derart den Ventilkolben 12 nach unten mitnimmt, das eine fluidführende Verbindung zwischen dem Druckversorgungsanschluss P und dem Verbraucheranschluss A geschaffen ist bei gleichzeitigem Absperren der beiden genannten Anschlüsse P, A gegenüber dem Tank- oder Rücklaufanschluss T.

Wie sich des Weiteren aus der Fig. 1 ergibt, befindet sich auf der rechten Seite eine Längsbohrung 30, die permanent druck- und fluidführend den Verbraucheranschluss A mit einer ringförmigen Ventilkammer 32 verbindet, die in Richtung des Ventilkolbens 12 ausmündet, wobei der Ventilkolben 12 in diesem Bereich im Durchmesser reduziert ist und insoweit eine Kreisringfläche 34 als sogenannte Messfläche oder druckwirksame Fläche ausbildet. Die dahingehende Längsbohrung 30 ist aus Gründen der Platzersparnis im Durchmesser sehr klein ausgebildet und mündet in axialer Richtung gesehen in eine der Querbohrungen der Bohrungsreihe 23 aus.

Des Weiteren ist koaxial zur Längsachse 24 eine Längsbohrung 36 im Ventilkolben 12 eingebracht, die an der unteren freien Stirnseite in den Tank-oder Rücklaufanschluss T ausmündet und an der gegenüberliegenden Seite in eine Querbohrung 38 im Ventilkolben 12, die von der Druckfeder 22 übergriffen ist. Die dahingehende Querbohrung 38 mündet in eine Federkammer 40 aus, die von dem Ventilkolben 12 durchgriffen ist und die die Druckfeder 22 aufnimmt, die sich mit ihrem einen freien unteren Ende im Bereich der Kammer 40 an einem Absatz des Ventilgehäuses 10 abstützt und an der gegenüberliegenden Seite an einer absatzartigen Verbreiterung am Ventilkolben 12.

Das bekannte Ventil ist als Einsatzventillösung für einen nicht näher dargestellten Ventilblock konzipiert und weist dafür eine Festlegeplatte 42 in der Art eines Anschlussflansches auf. Der Regeldruck kann nunmehr über den Verbraucheranschluss A und die im Durchmesser kleine Längsbohrung 30 in die Ventilkammer 32 oberhalb des Druckversorgungsanschlusses P geleitet werden. Wie bereits angesprochen, hat dort der Ventilkolben 12 einen kleinen Durchmessersprung und die hieraus resultierende Kreisringfläche 34 bildet insoweit eine druckwirksame Messfläche am Ventilkolben 12 aus, der im Übrigen über die Längsbohrung 36 mit seinen gegenüberliegenden Stirnseiten oben und unten mit dem Tank- oder Rücklaufanschluss T permanent verbunden ist.

Der angesprochene Regeldruck wirkt insoweit gegen diese Kreisring- oder Messfläche 34 und verursacht dabei eine Axialkraft, welche der Magnetkraft des Betätigungsmagneten 14 im bestromten Zustand entgegenwirkt. Somit kann der Regeldruck in Abhängigkeit der jeweils anliegenden Magnetkraft proportional verändert werden. D. h., ist der Regeldruck kleiner als die Magnetkraft dann bewegt sich der Ventilkolben nach unten und öffnet die Fluidführung vom Druckversorgungsanschluss P zum Verbraucheranschluss A über die zylindrische Ausnehmung 28 am Ventilkolben 12. Ist der Regeldruck hingegen zu hoch bewegt sich der Ventilkolben 12 nach oben und es entsteht eine entlastende Fluidführung vom Verbraucheranschluss A zum Rücklauf- oder Tankanschluss T.

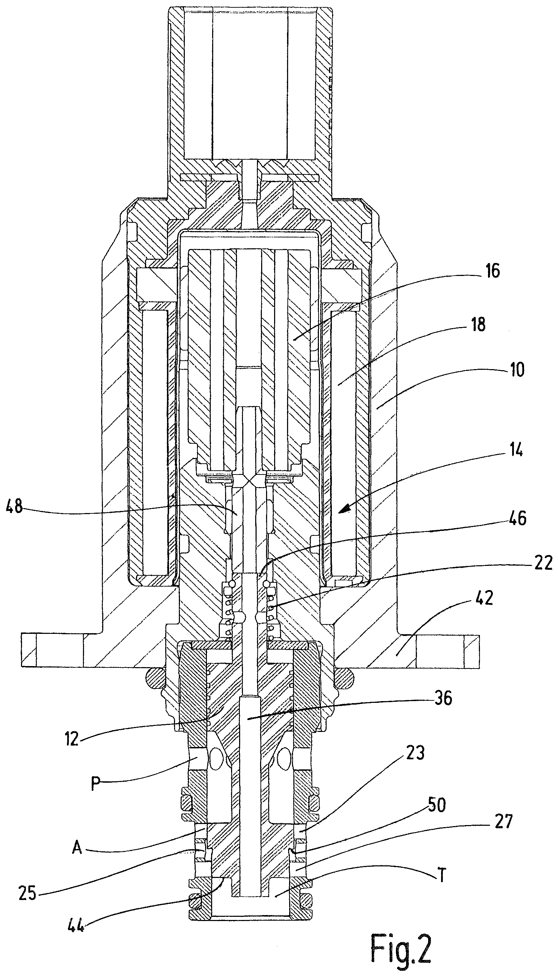

Die erfindungsgemäße Ventillösung nach den Fig. 2 bis 4 wird nunmehr nur noch insofern erläutert als sie sich wesentlich von der bekannten Lösung nach der Fig. 1 unterscheidet, wobei die bisherigen Ausführungen auch für die neue Ventillösung gelten und dieselben Bauteile mit denselben Bezugszeichen versehen werden, wie bei der bekannten Lösung nach der Fig. 1.

Fig. 2 zeigt das erfindungsgemäße Ventil in Form eines Proportional-Druckregelventils in einer seiner Regelstellungen. In Übereinstimmung mit der Ventillösung nach der Fig. 1 weist auch das erfindungsgemäße Ventil ein Ventilgehäuse 10 mit einem darin längsverfahrbar angeordneten Ventilkolben 12 auf, der mittels eines Betätigungsmagneten 14 ansteuerbar entweder eine fluidführende Verbindung zwischen einem Druckversorgungsanschluss P und einem Verbraucheranschluss A oder zwischen diesem Verbraucheranschluss A und einem Rücklaufanschluss T im Ventilgehäuse 10 herstellt. Der Rücklauf- oder Tankanschluss T führt regelmäßig zu einem Fluidvorratstank, wohingegen der Druckversorgungsanschluss P an eine Druckversorgungsquelle, wie eine Hydropumpe, angeschlossen ist; beides nicht dargestellt. Wie sich weiter aus der Fig. 2 ergibt und vergleichbar zu der Lösung im Stand der Technik nach der Fig. 1 ist der Ventilkolben 12 mit der Längsbohrung 36 versehen, sodass der Ventilkolben 12 auf seinen gegenüberliegenden Stirnseiten 44, 46 mit dem Rücklaufanschluss T permanent fluidführend verbunden und damit druckausgeglichen ist.

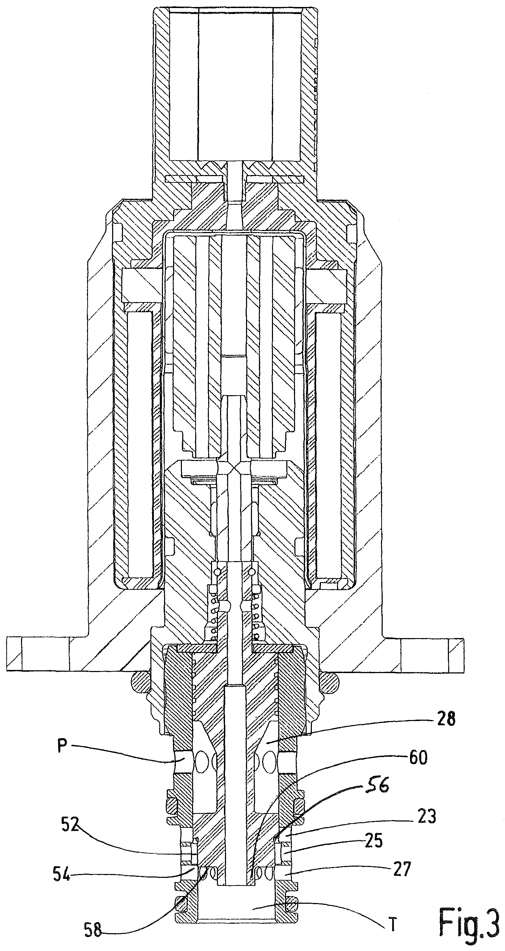

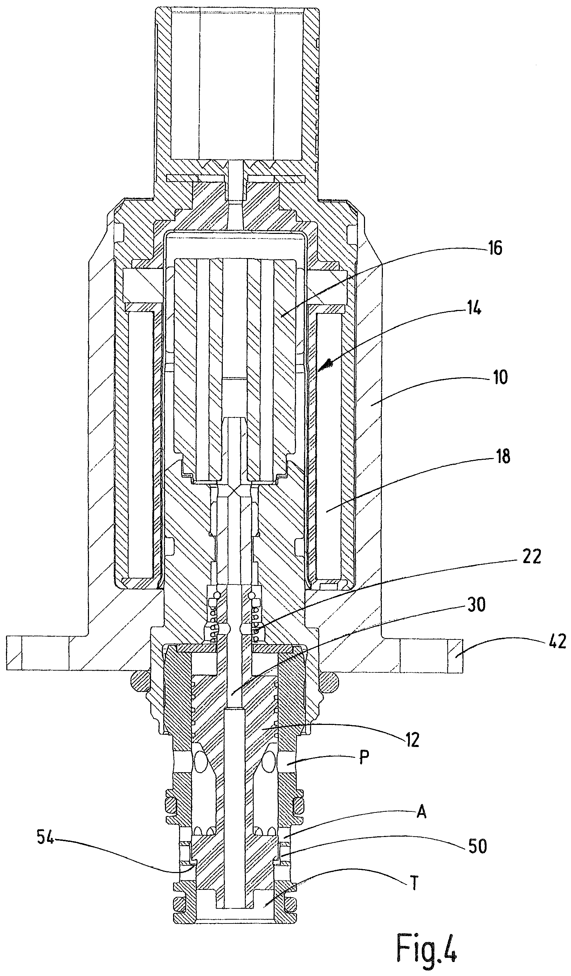

Gemäß der Darstellung nach der Fig. 2 ist die obere Stirnseite 46 des Ventilkolbens 12 in Anlage mit einer Betätigungsstange 48, die von dem Magnetanker 16 ansteuerbar ist. Hierfür weist der Betätigungsmagnet 14 gleichfalls einen bestrombaren Spulenkörper 18 auf und mit Bestromen des Spulenkörpers 18 über ein in den Fig. 2 bis 4 nicht näher dargestelltes Steckeranschlussteil 20 bewegt sich der Magnetanker 16 entgegen der Wirkung der Druckfeder 22 nach unten. Dabei kommt es in der Regelposition zu einer zumindest partiellen fluidführenden Verbindung zwischen dem Druckversorgungsanschluss P und dem Verbraucheranschluss A, wohingegen der Rücklaufanschluss T durch den Ventilkolben 12 abgesperrt ist. So nimmt im voll bestromten Zustand des Betätigungsmagneten 14 der Ventilkolben 12 eine Schaltposition nach der Fig. 4 ein, bei der es zu einer vollen Durchströmung des Ventils vom Druckversorgungsanschluss P zum Verbraucheranschluss A kommt. Im unbestromten Zustand hingegen stellt die Druckfeder 22 den Magnetanker 16 in seine maximale Ausgangsstellung in Verfahrrichtung nach oben zurück gemäß der Darstellung nach der Fig. 3 und ein voller Fluiddurchfluss ist zwischen dem Verbraucheranschluss A und dem Rücklaufanschluss T ermöglicht.

Wie sich des Weiteren aus den Fig. 2 bis 4 ergibt, weist der Ventilkolben 12 im Bereich des Verbraucheranschlusses A eine druckwirksame Messfläche 50 auf, die eine umlaufende Kreisringfläche ausbildet.

Für die erfindungsgemäße Ventilkonzeption ist von besonderer Bedeutung, dass der Verbraucheranschluss A aus mehreren, in der jeweiligen Verfahrrichtung des Ventilkolbens 12 gesehen, hintereinander angeordneten Bohrungsreihen 23, 25 und 27 besteht, von denen eine Bohrungsreihe 23 dem Herstellen der fluidführenden Verbindung zwischen Druckversorgungs- P und Verbraucheranschluss A und eine zweite Bohrungsreihe 25 der Druckweiterleitung vom Verbraucheranschluss A zur Messfläche 50 des Ventilkolbens 12 dient. Die dritte Bohrungsreihe 27 wiederum dient dem Herstellen einer fluidführenden Verbindung zwischen dem Verbraucheranschluss A und dem Rücklaufanschluss T (vgl. Fig. 3). Die mittlere Bohrungsreihe 25 braucht im Prinzip nur aus einer einzigen Bohrung zu bestehen, da sie insoweit nur als Messanschluss dient für die Weiterleitung des Druckes am Verbraucheranschluss A auf die kreisringförmige Messfläche 50 am Ventilkolben 12.

Es besteht aber auch die Möglichkeit, zur Vereinfachung der Fertigung alle drei Bohrungsreihen 23, 25 und 27 mit der jeweils gleichen Anzahl von Querbohrungen auszustatten mit demselben Bohrungsdurchmesser.

Zumindest bei unbestromtem Betätigungsmagneten 14 nimmt der Ventilkolben 12 eine Stellung gemäß der Darstellung nach der Fig. 3 ein, bei der die beiden benachbarten oberen Bohrungsreihen 23, 25 über eine Ausnehmung 52 im Ventilkolben 12, die durch Bildung einer Stufe die Messfläche 50 bildet, fluidführend miteinander in Verbindung stehen und die dritte darunterliegende Bohrungsreihe 27 von den beiden anderen genannten Bohrungsreihen 23, 25 mittels des Ventilkolbens 12 im Ventilgehäuse 10 separiert ist. Wie sich insbesondere aus der Fig. 2 ergibt, bilden die Querbohrungen der obersten Bohrungsreihe 23 mit dem Ventilkolben 12 an dieser Stelle eine erste Regelkante aus; ebenso die unterste Bohrungsreihe 27.

Von besonderer Bedeutung für die erfindungsgemäße Ventillösung ist ferner, dass zwischen zweiter 25 und dritter 27 Bohrungsreihe des Ventilgehäuses 10 eine ins Innere des Ventilgehäuses vorspringende Trennwand 54 vorhanden ist, deren flächenmäßige Größenausdehnung der Größe der Messfläche 50 am Ventilkolben 12 entspricht, vorzugsweise um einen geringfügigen Betrag größer ausgebildet ist. Die Trennwand 54 bildet insoweit eine membranartige Ringfläche aus und sorgt in jeder Verfahrstellung des Ventilkolbens 12 dafür, dass von der Bohrungsreihe 25 nicht ungewollt Fluid in die untere Bohrungsreihe 27 austreten kann, sodass insoweit immer sichergestellt ist, dass der in der Bohrungsreihe 25 anstehende Fluiddruck als Messdruck vom Verbraucheranschluss A stammend permanent an der Messfläche 50 des Ventilkolbens 12 ansteht.

Wie sich des Weiteren aus den Fig. 2 bis 4 ergibt, ist der Ventilkolben 12 auf seiner dem Rücklaufanschluss T zugewandten Seite durch eine Durchmesserreduzierung gestuft ausgebildet mit einer ersten Stufe 56, die die Messfläche 50 aufweist und mit einer in die erste Stufe 56 übergehenden zweiten Stufe 58, gebildet durch einen Rücksprung, dessen größter Außendurchmesser dem Innendurchmesser der Trennwand 54 und dem Innendurchmesser des Ventilgehäuses 10 an der Stelle des Rücklaufanschlusses T entspricht. Diese zweite Stufe 58 mündet auf der Unterseite des Ventilkolbens 12 in Richtung eines ringförmigen Fortsatzes 60 aus, der in Richtung des Rücklaufanschlusses T vorspringt; Fortsatz 60 und stufenförmiger Rücksprung 58 bilden insoweit die untere Stirnseite 44 des Ventilkolbens 12 aus. Für den Fluidfluss von Verbraucheranschluss A zu Rücklaufanschluss T bildet der Ventilkolben 12, wie sich aus der Darstellung nach der Fig. 3 ergibt, eine weitere Regelkante mit dem Ventilkolben 12 aus.

Für die noch näher zu erläuternde Regelung ist von Bedeutung, dass die wirksamen Druckflächen, insbesondere auf den gegenüberliegenden Stirnseiten 44, 46 des Ventilkolbens 12, sich um die Kreisringfläche unterscheiden, die durch die erste Stufe 56 und mithin durch die Messfläche 50 gebildet ist. In Übereinstimmung mit dem Stand der Technik weist auch die erfindungsgemäße Ventillösung im Bereich des Druckversorgungsanschlusses P eine zylindrische, hohlkammerartige Ausnehmung 28 auf, in die der Druckversorgungsanschluss P mit seinen Querbohrungen in jeder Verfahrstellung des Ventilkolbens 12 einmündet. Die in der Projektion gesehenen, stirnseitigen Begrenzungen dieser Ausnehmung 28 quer zur Verfahrrichtung des Ventilkolbens 12 sind dabei im Sinne einer Druckkompensation von der Fläche her gleich ausgebildet. Insgesamt zeichnet sich die Ventilkonstruktion durch einen rotationssymmetrischen Aufbau aus.

Wie insbesondere die Fig. 2 verdeutlicht, wirkt also der Regeldruck am Verbraucheranschluss A gegen die kreisringförmige Messfläche 50 am Ventilkolben 12 und verursacht eine Axialkraft, welche der Magnetkraft des Betätigungsmagneten 14 entgegenwirkt. Somit kann der Regeldruck in Abhängigkeit der jeweils anliegenden Magnetkraft proportional verändert werden. Dadurch, dass die druckwirksamen Flächen auf den beiden Stirnseiten 44, 46 des Ventilkolbens sich voneinander unterscheiden, und zwar genau um die Kreisringfläche am Durchmessersprung in Form der ersten Stufe 56 des Kolbens, die die Messfläche 50 ausbildet, kann genau an dieser Stelle der Arbeitsdruck am Verbraucheranschluss A in eine Kraft umgewandelt werden, die der Magnetkraft des Betätigungsmagneten 14 entgegenwirkt. Insoweit kann das erfindungsgemäße Ventil den Druck proportional regeln, weil der Druck immer in Balance zur Magnetkraft steht.

Ist demgemäß der Druck kleiner als die Magnetkraft, bewegt sich der Kolben 12 in Blickrichtung auf die Fig. 2 bis 4 gesehen nach unten und öffnet die Fluidführung vom Druckversorgungsanschluss P zum Verbraucheranschluss A, was in der Fig. 4 dargestellt ist. Ist der Druck zu hoch, bewegt sich der Ventilkolben 12 nach oben und es entsteht wiederum eine Fluidführung vom Verbraucheranschluss A zum Rücklaufanschluss, was Gegenstand der Darstellung nach der Fig. 3 ist.

Das erfindungsgemäße Ventil kann auch bei einem Kaltstart schnell schalten aufgrund der relativ großen zur Verfügung stehenden freien Durchströmungsquerschnitte zwischen Ventilkolben 12 und Ventilgehäuse 10. Des Weiteren kann der Ventilkolben 12 im Durchmesser signifikant vergrößert werden, was den Durchschlusswiderstand für das Öl erheblich reduziert, ohne dass dabei der Ventil-Einbauraum zu vergrößern wäre. Dies hat so keine Entsprechung im Stand der Technik.

## Patentansprüche

1. Ventil, insbesondere Proportional-Druckregelventil, mit einem Ventilgehäuse (10) und einem darin längsverfahrbar angeordneten Ventilkolben (12), der mittels eines Betätigungsmagneten (14) ansteuerbar entweder eine fluidführende Verbindung zwischen einem Druckversorgungsanschluss (P) im Ventilgehäuse (10) und einem Verbraucheranschluss (A) im Ventilgehäuse (10) oder zwischen diesem Verbraucheranschluss (A) und einem Rücklaufanschluss (T) im Ventilgehäuse (10) herstellt, wobei der Ventilkolben (12) auf seinen gegenüberliegenden Stirnseiten (44, 46) mit dem Rücklaufanschluss (T) permanent fluidführend verbunden ist, wobei der Ventilkolben (12) im Bereich des Verbraucheranschlusses (A) eine druckwirksame Messfläche (50) aufweist, die bei bestromtem Betätigungsmagneten (14) zum Herstellen einer fluidführenden Verbindung zwischen dem Druckversorgungs-(P) und dem Verbraucheranschluss (A), den dabei am Verbraucheranschluss (A) jeweils herrschenden Fluiddruck als Gegenkraft der Betätigungskraft des Betätigungsmagneten (14) gegenüberstellt, und wobei der Verbraucheranschluss (A) aus mehreren in Verfahrrichtung des Ventilkolbens (12) gesehen hintereinander angeordneten Bohrungsreihen (23, 25, 27) besteht, von denen eine Bohrungsreihe (23) dem Herstellen der fluidführenden Verbindung zwischen Druckversorgungs- (P) und Verbraucheranschluss (A) und eine zweite Bohrungsreihe (25) der Druckweiterleitung vom Verbraucheranschluss (A) zur Messfläche (50) des Ventilkolbens (12) dient,
**dadurch gekennzeichnet,**
**dass** eine dritte Bohrungsreihe (27) dem Herstellen einer fluidführenden Verbindung zwischen dem Verbraucher- (A) und dem Rücklaufanschluss (T) dient.

2. Ventil nach Anspruch 1, **dadurch gekennzeichnet, dass** zumindest bei unbestromtem Betätigungsmagneten (14) der Ventilkolben (12) eine Stellung einnimmt, bei der die beiden Bohrungsreihen (23, 25) über eine Ausnehmung (52) im Ventilkolben (12), die die Messfläche (50) bildet, fluidführend miteinander in Verbindung stehen und die dritte Bohrungsreihe (27) von den beiden Bohrungsreihen (23, 25) mittels des Ventilkolbens (12) im Ventilgehäuse (10) separiert ist.

3. Ventil nach Anspruch 1 oder 2, **dadurch gekennzeichnet, dass** zwischen zweiter (25) und dritter Bohrungsreihe (27) des Ventilgehäuses (10) eine ins Innere des Ventilgehäuses (10) vorspringende Trennwand (54) vorhanden ist, deren Größe der Größe der Messfläche (50) am Ventilkolben (12) entspricht.

4. Ventil nach Anspruch 3, **dadurch gekennzeichnet, dass** der Ventilkolben (12) auf seiner dem Rücklaufanschluss (T) zugewandten Seite (56) gestuft ausgebildet ist, mit einer ersten Stufe, die die Messfläche (50) aufweist und mit einer in die erste Stufe (56) übergehenden zweiten Stufe (58), gebildet durch einen Rücksprung, dessen größter Außendurchmesser dem Innendurchmesser der Trennwand (54) und dem Innendurchmesser des Ventilgehäuses (10) an der Stelle des Rücklaufanschlusses (T) entspricht.

5. Ventil nach einem der vorstehenden Ansprüche, **dadurch gekennzeichnet, dass** bei unbestromtem Betätigungsmagnet (14) der Ventilkolben (12) eine fluidführende Verbindung zwischen dem Verbraucheranschluss (A) und dem Rücklaufanschluss (T) herstellt.

6. Ventil nach einem der vorstehenden Ansprüche, **dadurch gekennzeichnet, dass** die Durchmesser aller Bohrungen von allen Bohrungsreihen (23, 25, 27) gleich sind.

7. Ventil nach Anspruch 4, **dadurch gekennzeichnet, dass** die wirksamen Druckflächen auf den gegenüberliegenden Stirnseiten (44, 46) des Ventilkolbens (12) sich um die Kreisringfläche unterscheiden, die durch die erste Stufe (56) mit der Messfläche (50) gebildet ist.

8. Ventil nach einem der vorstehenden Ansprüche, **dadurch gekennzeichnet, dass** für die Rückstellung des Ventilkolbens (12) in eine Ausgangsstellung bei unbestromtem Betätigungsmagneten (14) ein Energiespeicher, vorzugsweise in Form einer Druckfeder (22), dient, der sich mit ihrem einen Ende am Ventilkolben (12) und mit ihrem anderen Ende an Teilen des Ventilgehäuses (10) abstützt.

## Claims

1. Valve, in particular a proportional pressure-regulating valve, having a valve housing (10) and a valve piston (12), which is arranged therein so as to be longitudinally displaceable, said valve piston being able to be actuated by means of an actuating solenoid (14) to produce either a fluid-conducting connection between a pressure supply port (P) in the valve housing (10) and a consumer port (A) in the valve housing (10) or between this consumer port (A) and a return port (T) in the valve housing (10), the valve piston (12) being permanently connected to the return port (T) at its opposing end faces (44, 46) in a fluid-conducting manner, the valve piston (12) having a pressure-active measuring surface (50) in the region of the consumer port (A), which pressure-active measuring surface compares the respective fluid pressure prevailing at the consumer port (A) as a counterforce to the actuating force of the actuating solenoid (14) in this process when the actuating solenoid (14) is energised in order to produce a fluid-conducting connection between the pressure supply port (P) and the consumer port (A), and the consumer port (A) consisting of a plurality of rows (23, 25, 27) of drilled holes arranged one after the other viewed in the direction of travel of the valve piston (12), one row (23) of these drilled holes serving to establish the fluid-conducting connection between the pressure supply port (P) and the consumer port (A) and a second row (25) of drilled holes serving to transfer the pressure from the consumer port (A) to the measuring surface (50) of the valve piston (12),
**characterised in that**
a third row (27) of drilled holes serves to establish a fluid-conducting connection between the consumer port (A) and the return port (T).

2. Valve according to claim 1, **characterised in that**, at least when the actuating solenoid (14) is de-energised, the valve piston (12) assumes a position in which the two rows (23, 25) of drilled holes are in communication with each other in a fluid-conducting manner via a recess (52) in the valve piston (12), said recess forming the measuring surface (50), and the third row (27) of drilled holes is separated from the two rows (23, 25) of drilled holes by means of the valve piston (12) in the valve housing (10).

3. Valve according to either claim 1 or claim 2, **characterised in that**, between the second (25) and third row (27) of drilled holes of the valve housing (10), there is a separating wall (54) which protrudes into the interior of the valve housing (10), the size of which corresponds to the size of the measuring surface (50) on the valve piston (12).

4. Valve according to claim 3, **characterised in that** the valve piston (12) is configured in a stepped manner on its side (56) directed towards the return port (T), with a first step which comprises the measuring surface (50) and with a second step (58) merging into the first step (56), formed by a recess, the largest external diameter of which corresponds to the internal diameter of the separating wall (54) and to the internal diameter of the valve housing (10) at the location of the return port (T).

5. Valve according to any of the preceding claims, **characterised in that**, when the actuating solenoid (14) is de-energised, the valve piston (12) establishes a fluid-conducting connection between the consumer port (A) and the return port (T).

6. Valve according to any of the preceding claims, **characterised in that** the diameters of all the drilled holes of all the rows (23, 25, 27) of drilled holes are identical.

7. Valve according to claim 4, **characterised in that** the effective pressure surfaces on the opposing end faces (44, 46) of the valve piston (12) differ by the annular surface which is formed by the first step (56) with the measuring surface (50).

8. Valve according to any of the preceding claims, **characterised in that** an energy accumulator, preferably in the form of a compression spring (22), serves to return the valve piston (12) to a starting position when the actuating solenoid (14) is de-energised, said spring being supported with one end on the valve piston (12) and with its other end on parts of the valve housing (10).

## Revendications

1. Soupape, en particulier soupape de réglage de la pression proportionnelle, comprenant un corps (10) de soupape et un piston (12) de soupape, qui y est montée avec possibilité de se déplacer longitudinalement et qui, en pouvant être commandée au moyen d'un aimant (14) d'actionnement, produit une liaison fluidique entre un raccord (P) d'alimentation en pression dans le corps (10) de la soupape et un raccord (A) de consommateur dans le corps (10) de la soupape ou entre ce raccord (A) de consommateur et un raccord (T) de retour dans le corps (10) de la soupape, dans laquelle le piston (12) de la soupape est, sur ses côtés (44, 46) frontaux opposés, relié de manière permanente fluidiquement au raccord (T) de retour, dans laquelle le piston (12) de la soupape a, dans la partie du raccord (A) de consommateur, une surface (50) de mesure efficace en pression qui, lorsque l'aimant (14) d'actionnement est alimenté en courant pour la production d'une communication fluidique entre l'alimentation (P) en pression et le raccord (A) de consommateur, s'oppose comme force antagoniste à la pression d'actionnement de l'aimant (14) d'actionnement à la pression de fluide régnant respectivement au raccord (A) de consommateur, et dans laquelle le raccord (A) de consommateur est constitué de plusieurs rangées (23, 25, 27) de trous disposés les uns derrière les autres, considéré dans le sens de déplacement du piston (12) de la soupape, parmi lesquelles une rangée (23) de trous sert à la production de la communication fluidique entre le raccord (P) d'alimentation en pression et le raccord (A) de consommateur et une deuxième rangée (25) de trous à l'acheminement de la pression du raccord (A) de consommateur à la surface (50) de mesure du piston (12) de la soupape, **caractérisée**
**en ce qu'**une troisième rangée (27) de trous sert à la production d'une communication fluidique entre le raccord (A) de consommateur et le raccord (T) de retour.

2. Soupape suivant la revendication 1, **caractérisée en ce que**, au moins lorsque l'aimant (14) d'actionnement du piston (12) de la soupape n'est pas alimenté en courant, est prise une position dans laquelle les deux rangées (23, 25) de trous sont en communication fluidique entre elles par un évidement (52) du piston (12) de la soupape, qui forme la surface (50) de mesure, et la troisième rangée (27) de trous est séparée des deux rangées (23, 25) de trous au moyen du piston (12) de la soupape dans le corps (10) de la soupape.

3. Soupape suivant la revendication 1 ou 2, **caractérisée en ce que**, entre la deuxième (25) et la troisième (27) rangée de trous du corps (10) de la soupape, il y a une cloison (54) faisant saillie vers l'intérieur du corps (10) de la soupape, dont la dimension correspond à la dimension de la surface (50) de mesure du piston (12) de la soupape.

4. Soupape suivant la revendication 3, **caractérisée en ce que** le piston (12) de la soupape est, sur son côté (56), tourné vers le raccord (T) de retour, de constitution à gradins, comprenant un premier gradin, qui a la surface (50) de mesure, et un deuxième gradin (58), se transformant en le premier gradin (56), formé par un recoin, dont le diamètre extérieur le plus grand correspond au diamètre intérieur de la cloison (54) et au diamètre intérieur du corps (10) de la soupape à l'endroit du raccord (T) de retour.

5. Soupape suivant l'une des revendications précédentes, **caractérisée en ce que**, lorsque l'aimant (14) d'actionnement n'est pas alimenté en courant, le piston (12) de la soupape produit une communication fluidique entre le raccord (A) de consommateur et le raccord (T) de retour.

6. Soupape suivant l'une des revendications précédentes, **caractérisée en ce que** les diamètres de tous les trous de toutes les rangées (23, 25, 27) de trous sont égaux.

7. Soupape suivant la revendication 4, **caractérisée en ce que** les surfaces efficaces de pression, sur les côtés (44, 46) frontaux opposés du piston (12) de la soupape, se distinguent de la surface annulaire de cercle, qui est formée par le premier gradin (56) ayant la surface (50) de mesure.

8. Soupape suivant l'une des revendications précédentes, **caractérisée en ce que**, pour la position en retour du piston (12) de la soupape dans une position initiale, alors que l'aimant (14) d'actionnement n'est pas alimenté en courant, on se sert d'un accumulateur d'énergie, de préférence sous la forme d'un ressort (22) de compression, qui s'appuie, par l'une de ses extrémités, sur le piston (12) de la soupape et, par son autre extrémité, sur des parties du corps (10) de la soupape.
